# EUROPEAN PATENT APPLICATION

(11) **EP 2 889 991 A1**
(43) Date of publication of application: **01.07.2015**
(21) Application number: 12890118.8
(22) Date of filing: 14.12.2012
(51) Int. Cl.: H02K 35/02, H02K 35/04

(54) **PERMANENT MAGNET POWER GENERATING DEVICE**

(71) Applicant: Wuhan Linptech Co., Ltd, Hubei 430073 (CN)
(72) Inventor: CHENG, Xiaoke, Hubei 430073 (CN)
(74) Representative: Laufhütte, Dieter
(86) International application number: PCT/CN2012/086633
(87) International publication number: WO 2014/089817

(57) **Abstract**

A permanent magnet power generating device comprises a first soft magnetic body (1), a coil (2) and a permanent magnet (3). The first soft magnetic body has a first branch (11), a second branch (12), and a third branch (13) arranged at intervals. The second branch is located between the first branch and the third branch. The coil is wound around the second branch. The permanent magnet, which is in the form of "C" shape, is provided with two branches inserted between the first branch and the second branch, and between the second branch and the third branch, respectively. Both of the branches of the permanent magnet are in contact with the first branch and the second branch of the first soft magnetic body, or with the second branch and the third branch of the first soft magnetic body, selectively. The permanent magnet power generating device is low-cost, simple-structure, non-polluting, and suitable for the application of collecting micro energy.

## Description

### FIELD OF THE INVENTION

The invention relates to a magnet power generating device, more specifically, the invention relates to a permanent magnet linear motion power generating device.

### BACKGROUND OF THE INVENTION

At present, there are many magnetic power generating device, generator is the most commonly device. Generator can convert the mechanical energy generated by continuous rotation movement to electrical energy, it can not be applied to the condition, which is in stick volume restricting environment, because of its complex-structure, big-volume. In addition, the traditional magnet power generating device represented by generator requires continuous rotation action to provide continuous power, which is generally only applied to power plant environment, etc.

Under the state advocates energy conservation and environmental protection, in energy collection field, there are many requirements about special micro power generating device, and the traditional magnet power generating device represented by the generator is difficult to meet the requirements. The booming Internet of things industry, using traditional battery, will cause the high maintenance cost, severe pollution and the other problem, and the power supply problem of the micropower wireless sensor network has become the bottleneck of the Internet of things popularization.

### SUMMARY OF THE INVENTION

To solve the above problems, the present invention adopts the following technical solution: to provide a permanent magnet power generating device, including a first soft magnetic body, a coil and a permanent magnet; The first soft magnetic body has a first branch and a second branch and a third branch arranged at intervals. The second branch is located between the first and the third branch. The coil is wound around the second branch; The permanent magnet, which is in the form of "C" shape, is provided with two branches inserted between the first branch and the second branch, and between the second branch and the third branch, respectively. Both of the branches of the permanent magnet are in contact with the first branch and the second branch of the soft magnetic body, or with the second branch and the third branch of the first soft magnetic body, selectively.

In one embodiment, the first soft magnetic body has a tabulate soft magnetic base, the three branches of the first soft magnetic body are stretched by the tabulate soft magnetic base, and end of the three branches are parallel to each other.

In one embodiment, the first soft magnetic body is in a "E" shape, the three branches of the first soft magnetic body are parallel to each other and are perpendicular to the soft magnetic base.

In one embodiment, the front and back ends of the soft magnetic base stretches shield arm separately,. The first branch connects the top of the two shield arms and a through hole placing the coil is formed by the first soft magnetic base, the two shield arms, and the third branch connects the bottom of the two shield arms. The second branch is stretched by the soft magnetic base perpendicularly.

In one embodiment, the front or back ends of the soft magnetic base stretches a shield arm separately, t. The first branch and the third branch are stretched perpendicularly by the up and down sides of the shield arm end, and the second branch is stretched by the soft magnetic base perpendicularly.

In one embodiment, the permanent magnet includes a main permanent magnet and two second soft magnet, the two second soft magnet connect with both ends of the main permanent magnet to form a C-shape structure.

In one embodiment, the main permanent magnet has two end planes with different polarity, the two end planes of the main permanent magnet connect to the side plane of the two second soft magnet.

In one embodiment, the contact location of the permanent magnet and the branches of the first soft magnetic body is a surface contact.

In one embodiment, the permanent magnet and the first soft magnetic body can relative move along the direction which is perpendicular with the central axis of the coil.

In one embodiment, there is elastic equipment on the permanent magnet or the first soft magnetic body to drive them moving.

Further, the elastic equipment is spring or shrapnel.

The foregoing descriptions of the permanent magnet power generating device realize the conversion between two states by permanent magnet contact with the different branches of the soft magnetic body, the contact location of permanent magnet and the soft magnetic body will generate magnetic attraction to fix both at the present state, when there is no external force or external force is less than magnetic attraction, power generation device will remain in the present state to form a equilibrium state. When the external force is opposite to the magnetic force and is larger than the magnetic attraction, the generating device will switch from one equilibrium state to another equilibrium state, while the magnetic flux in the coil will be changing rapidly to generate electricity. The permanent magnet power generating device is different from the existing permanent magnet generator, the set needs not a continuous rotation action to generate power, it can translate the energy of the small translational travel to electricity, the permanent magnet power generating device for low-cost, simple-structure, non-polluting, is particularly suitable for the applications in the field of micro energy collection, such as wireless switches, buttons, vibration environment, the wireless signal transmitter, etc., which can replace the traditional batteries, and is one of the ideal energy solutions of micropower wireless sensor network.

### BRIEF DESCRIPTION OF THE DRAWINGS

FIG. 1 is the first equilibrium state schematic diagram of a better embodiment of the present invention.
FIG. 2 is the second equilibrium state schematic diagram of a better embodiment of the present invention.
FIG. 3 is the stereoscopic schematic diagram of the first embodiment according to the present invention.
FIG. 4 is the stereoscopic schematic diagram of the second embodiment according to the present invention.
FIG. 5 is the stereoscopic schematic diagram of first soft magnetic body in FIG. 4.
FIG. 6 is the stereoscopic schematic diagram of the third embodiment according to the present invention.

### DETAILED DESCRIPTION OF THE INVENTION

In order to make the technical problems, technical solution and good effect solved by the present invention more clearly, hereinafter, embodiments of the present invention will be described in detail with reference to the accompanying drawings. While the concrete implementation embodiment described here is only to explain the invention, not used to limit the invention.

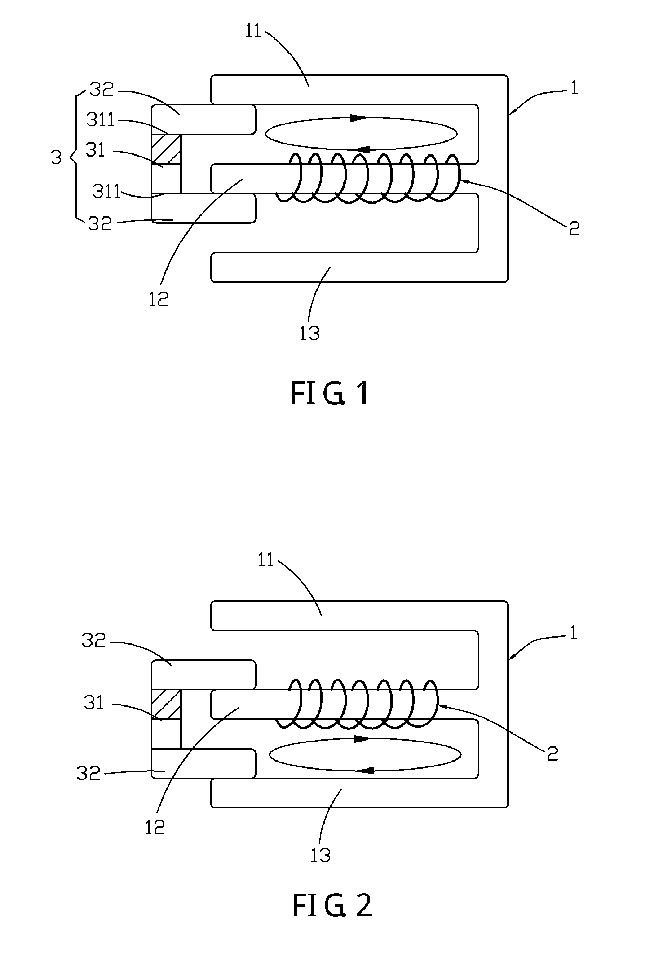

Referring to FIG. 1 and FIG. 2, an embodiment according to this invention comprises first soft magnetic body 1, coil 2 and permanent magnet 3.

First soft magnetic body 1 has a first branch 11 and a second branch 12 and a third branch 13 arranged at intervals. The second branch 12 is located between the first branch 11 and the third branch 13. The coil 2 is wound around the second branch 12.

Permanent magnet 3, which is in the form of "C" shape, is provided with two branchesinserted between the first branch 11 and second branch 12, as well as between the second branch 12 and third branches 13 of the first soft magnetic body 1, respectively. At the present embodiment, the permanent magnet 3 includes the main permanent magnet 31 and two second soft magnet 32, the two second soft magnet 32 connect with both ends of the main permanent magnet 31 to form a C-shape structure, the main permanent magnet 31 can magnetize the second soft magnet 32 at its both ends to form a C-shape permanent magnet 3.

The main permanent magnet 31 has two end planes 311 with different polarity, the two end planes 311 of the main permanent magnet 31 connect to the side plane of the second soft magnet 32, this contact mode has better magnetizing effect than the end plane of second soft magnet 32 is contact with side of main permanent magnet 31.

The two branches of the permanent magnet 3 can be contact selectively with first branch 11 and second branch 12 of the first soft magnetic body 1 or the second branch 12 and third branch 13 of the first soft magnetic body 1. Specifically, the permanent magnet power generating device has two breakover magnetic circuits named first equilibrium state and second equilibrium state. When permanent magnet power generating device in the first equilibrium state, as shown in FIG. 1, the two branches of the permanent magnet 3 contact with the first branch 11 and second branch 12, separate from the third branch 13; While, permanent magnet 3 absorbs on the top of the first soft magnetic body 1 (the position showed as FIG. 1), there is a gap between the bottom half of permanent magnet 3 and first soft magnetic body 1, so the upper half of the magnetic circuit is breakover and bottom half is off, most of the magnetic field lines through from the upper part of magnetic circuit, the magnetic field direction in the coil 2 is shown as the arrow direction in FIG. 1. When permanent magnet power generating device in the second equilibrium state, as shown in FIG. 2, the two branches of the permanent magnet 3 are contact with the second branch 12 and third branch 13, separate from the first branch 11. While, the permanent magnet 3 absorbs on the bottom of the first soft magnetic body 1 (the position showed as FIG. 2), there is a gap between the upper half of permanent magnet 3 and first soft magnetic body 1, so the upper half of the magnetic circuit is off and bottom half is breakover, most of the magnetic field lines through from the bottom part of magnetic circuit, the magnetic field direction in the coil 2 is shown as the arrow direction in FIG. 2.

According this embodiment, the permanent magnet 3 and the branches of first soft magnetic body 1 is surface contact and the permanent magnet 3 contact with end of first soft magnetic body 1.

The foregoing descriptions of the permanent magnet power generating device realize conversion between two states by permanent magnet 3 contact with the different branches of the soft magnetic body 1, the contact location of permanent magnet 3 and the soft magnetic body 1 will generate magnetic attraction to fix both at the present state, when there is no external force or external force is less than magnetic attraction, power generation equipment will remain in the present state to form a equilibrium state. When the external force opposite magnetic force and larger than the magnetic attraction, the generating device will switch from one equilibrium state to another equilibrium state, while the magnetic flux in the coil 2 will be changing rapidly to generate electricity.

According to foregoing descriptions, at the first equilibrium state and the second equilibrium state, the magnetic field in the coil 2 has the opposite direction, taking the number of turns and the cross-sectional area of coil 2 into consideration, the magnetic flux changes greatly and electromotive force is produced in the coil 2. At this point the set can export electricity to energy storage devices, or supply the micro power equipment after rectification with voltage regulator. The permanent magnet 3 and the first soft magnetic body 1 can relative move along direction which is perpendicular to the central axis of the coil 2. In the actual implementation, the electromotive force generated in the coil 2 is associated with the change rate of magnetic flux, so you need to improve the speed of state switch as soon as possible, when the external force is fast enough, the external force can act on the power structure of the moving parts (permanent magnet 3 or the first soft magnetic body 1) directly, when external force is not fast enough, a elastic device (such as spring or shrapnel) connect the external force and power structure of the moving parts (permanent magnet 3 or the first soft magnetic body 1), the power is accumulation in the elastic device and release rapidly to improve capacity.

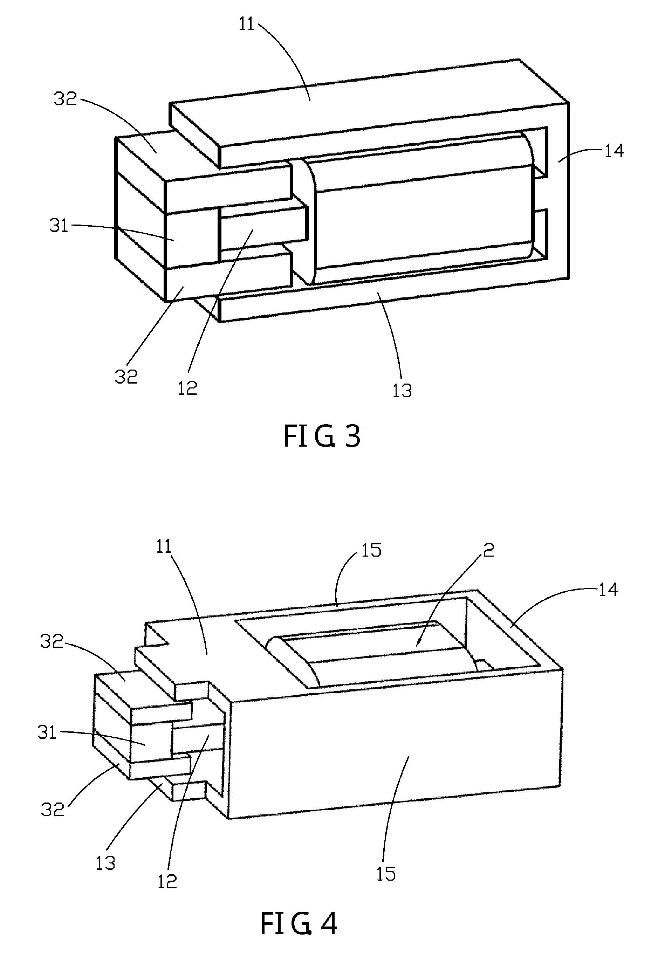

Referring to FIG. 3 to FIG. 6, they are the two embodiments according to this invention. The first soft magnetic body 1 has a tabulate soft magnetic base 14, the three branches of the first soft magnetic body 1 are stretched out by the tabulate soft magnetic base 14, and the end of the three branches are parallel to each other.

FIG. 3 is the specific schematic diagram of the first embodiment according to the present invention, the first soft magnetic body 1 has a classic E-shape structure. The first soft magnetic body 1 can be a integrated body or be patchwork, its three parallel branches is perpendicular to the soft magnetic base 14, the coil 2 is wound around the second branch 12 and the first branch 11 and third branch 13 locate relative sides of the coil 2 (the position in the FIG. 3 is up and down sides). Direction of magnetization of the main permanent magnet 31 is up and down direction to form a C-shape permanent magnet 3 with second soft magnet 32. The motion part can be permanent magnet 3 or first soft magnetic body 1.

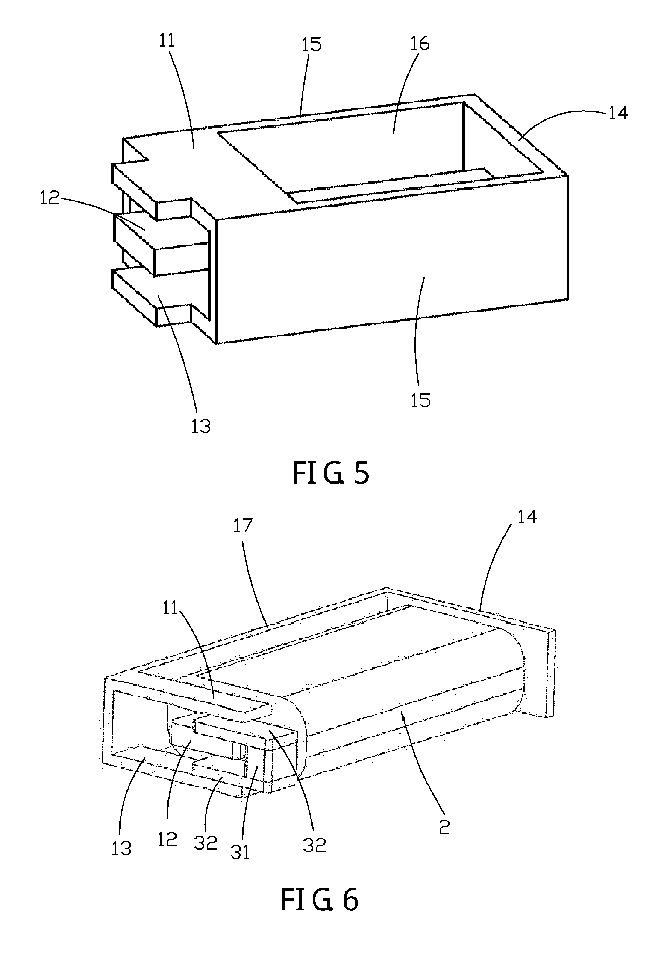

FIG. 4 and FIG. 5 are one improved structure according to this invention, which can reduce the height of the structure and be applied in the more thin production. According this embodiment, the front and back ends of the soft magnetic base 14 stretches a shield arm 15separately, the first branch 11 connects the top of the two shield arms 15 and a through hole 16 placing the coil 2 is formed by the first soft magnetic base 14 , the two shield arms 15, and the third branch 13 connects the bottom of the two shield arms 15, the second branch is stretched by the soft magnetic base 14 perpendicularly.

FIG. 6 is the specific schematic diagram of the third embodiment according to the present invention, the front and back ends of the soft magnetic base 14 stretches a shield arm 17(According to the embodiment shown as FIG. 6, shield arm 17 is stretched by the back end of soft magnetic base 14), the first branch 11 and the third branch 13 are stretched perpendicularly by the up and down sides of the shield arm 17 end, and the second branch 12 is stretched by the soft magnetic base 14 perpendicularly.

The permanent magnet power generating device is different from the existing permanent magnet generator, the set needs not a continuous rotation action to generate power, it can translate the energy of the small translational travel to electricity, the permanent magnet power generating device for low-cost, simple-structure, non-pollutiing, is particularly suitable for applications in the field of micro energy collection, such as wireless switches, buttons, vibration environment, the wireless signal transmitter, etc., which can replace the traditional batteries, and is one of the ideal energy solutions of micropower wireless sensor network.

The foregoing description of a preferred embodiment of the invention has been presented for purposes of illustration and description, which can not limit the scope of implementation of the invention, the changes and decorating of the invention according to the scope of this application should still belongs to the present invention within the scope of cover.

## Claims

1. A permanent magnet power generating device, comprising a first soft magnetic body, a coil and a permanent magnet; wherein the first soft magnetic body has a first branch, a second branch and a third branch arranged at intervals; wherein the second branch is located between the first and the third branch, wherein the coil is wound around the second branch; wherein the permanent magnet, which is in the form of "C" shape, is provided with two branches inserted between the first branch and the second branch of the first soft magnetic body, and between the second branch and the third branch of the first soft magnetic body, respectively; and wherein both of the branches of the permanent magnet are in contact with the first branch and the second branch of the first soft magnetic body, or with the second branch and the third branch of the first soft magnetic body, selectively.

2. The permanent magnet power generating device according to claim 1, wherein the first soft magnetic body has a tabulate soft magnetic base, the three branches of the first soft magnetic body are formed by extension of the soft magnetic base, and the ends of the three branches are parallel to each other.

3. The permanent magnet power generating device according to claim 2, wherein the first soft magnetic body has a E-shape, the three branches of the first soft magnetic body are parallel to each other and are perpendicular to the soft magnetic base.

4. The permanent magnet power generating device according to claim 2, wherein the front and back ends of the soft magnetic base are vertically bent and stretch to form a shield arm, separately, wherein the first branch connects between the top ends of the two shield arms , and together with the soft magnetic base and the two shield arms forms a hole for placing the coil, wherein the third branch connects between the bottoms of the two shield arms, and wherein the second branch is formed by perpendicular extension of the soft magnetic base.

5. The permanent magnet power generating device according to claim 2, wherein the front or back end of the soft magnetic base is vertically bent and stretch for form a shield arm, wherein the first branch and the third branch are formed by extension of perpendicular bending of the upper and lower sides of the shield arm end, and wherein the second branch is formed by perpendicular extension of the soft magnetic base.

6. The permanent magnet power generating device according to claim 1, wherein the permanent magnet includes a main permanent magnet and two second soft magnets, the two second soft magnets separately connect with two ends of the main permanent magnet to form a C-shape structure.

7. The permanent magnet power generating device according to claim 6, wherein the main permanent magnet has two end planes with different polarities, the two end planes of the main permanent magnet separately connect to side planes of the two second soft magnets.

8. The permanent magnet power generating device according to claim 1, wherein the contact location of the permanent magnet and the branches of the first soft magnetic body is surface contact.

9. The permanent magnet power generating device according to claim 1, wherein the permanent magnet and the first soft magnetic body can move relative to each other along a direction which is perpendicular to the central axis of the coil.

10. The permanent magnet power generating device according to claim 9, wherein an elastic equipment is provided on the permanent magnet or on the first soft magnetic body to drive its movement.

11. The permanent magnet power generating device according to claim 10, wherein the elastic equipment is spring or shrapnel.
